(19) Europäisches Patentamt

European Patent Office

Office européen des brevets

(11) **EP 0 910 040 B1**

(12) **EUROPEAN PATENT SPECIFICATION**

(45) Date of publication and mention
of the grant of the patent:
**02.11.2005 Bulletin 2005/44**

(51) Int Cl.⁷: **G06T 5/00**

(21) Application number: **98308108.4**

(22) Date of filing: **29.09.1998**

(54) **Method and apparatus for compensation for distortion between blocks of a scanned image**

Verfahren und Vorrichtung zur Kompensation von Verzerrungen zwischen Blöcken eines abegetasteten Bildes

Procédé et appareil pour compenser les distorsions entre blocs d'une image balayée

(84) Designated Contracting States:
**DE FR GB IT**

(30) Priority: **29.09.1997 KR 9749529**

(43) Date of publication of application:
**21.04.1999 Bulletin 1999/16**

(73) Proprietor: **SAMSUNG ELECTRONICS CO., LTD.**
**Suwon-si, Kyungki-do (KR)**

(72) Inventor: **Kim, Han-sin**
**Seocho-gu, Seoul (KR)**

(74) Representative: **Boakes, Jason Carrington**
**Harrison Goddard Foote**
**31 St Saviourgate**
**York YO1 8NQ (GB)**

(56) References cited:
**EP-A- 0 336 365**          **JP-A- 6 339 026**
**JP-A- 10 075 342**          **US-A- 4 564 865**

## Description

The present invention relates to a shuttle scanner which compensates for image distortion.

Recently, multi-tasking systems that combine the various functions of printer, facsimile machine, copier, scanner, etc., have been developed. In combining scanner functions with a printer, a shuttle-type scanner using a shuttle scanner module is typically employed. The shuttle scanner module travels across a sheet of paper together with the ink cartridge, using the same driving system as that of the print head module, and the paper is fed using a line feed motor (stepper motor). A shuttle scanner, however, has its own unique set of problems in performing a scanning operation.

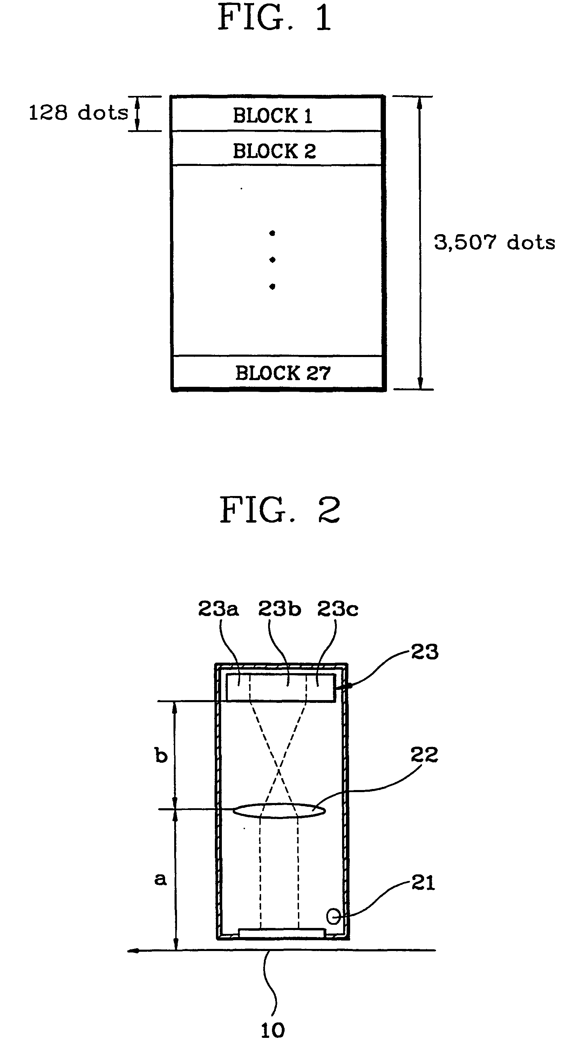

For example, as shown in FIG. 1, in scanning an object (e.g., document original) using a shuttle scanner module, scanning is performed by dividing the scanned object into 22-27 shuttle blocks, depending on the dimensions of the scanner module. That is, assuming an A4-size sheet of paper is scanned at a resolution of 300 dpi, there are a total of 3,507 lengthwise dots available along the paper feed path, so a scanner module having a size (pixel number) of 128 dots would result in a division of the sheet into 27 blocks. In dividing an object to be scanned into blocks, an inter-block image distortion phenomenon occurs whereby duplicate image portions are scanned into adjacent blocks and then overlapped or whereby a gap occurs between adjacent blocks. This problem results from errors in magnification which occur during the manufacture of the scanner module itself, due to ordinary assembly tolerances. Accordingly, the degree of magnification is set during scanner module assembly.

As shown in FIG. 2, a typical shuttle scanner module includes a lamp 21 to illuminate an object 10 by radiating visible light, a lens 22 to adjust (set) the focus of the light of the lamp reflected from the object to be scanned and incident on the scanner module, and an optical sensor 23 such as a charge-coupled device to form an image by receiving the light passed through the lens. An active cell portion 23b of the optical sensor 23, which is determined by the relative positioning of the lens 22, receives real image data while inactive cell portions 23a and 23c are ineffective. The image data output from the optical sensor 33 is synchronised with clock pulses, to set the start and end points of the scanning data using an on-board data processor.

In the above device, a magnification factor is determined by the relationship between the lens 22 and the optical sensor 23 and their relative placement with respect to the object being scanned. That is, if the distance from the reflecting surface of the object 10 to the lens 22 is "a" and the distance from the lens 22 to the receiving surface of the optical sensor 33 is "b", the magnification factor is b/a. This factor is set during the assembly of the scanner module, by changing the position of the lens 32.

Therefore, distortion occurs in the read (scanned) image due to an error of the magnification adjustment which takes place during scanner module assembly. This distortion consists of overlapping of duplicate image data and/or omission of image data in the border areas between adjacent blocks.

US 5892590 discloses a different type of image scanner which removes distortion components from a scanned image.

Accordingly, it is an aim of the present invention to at least partly overcome such drawbacks.

According to a first aspect of the present invention there is provided a method for compensating for inter-block image distortion in a shuttle scanner having a linear optical sensor, comprising:

scanning a reference pattern having a predetermined dimension parallel to the optical sensor; comparing that dimension of the scanned image with that of the reference pattern; and correcting image distortion occurring between adjacent image blocks by determining an image block end point in accordance with the result of that comparison.

Preferably, the linear optical sensor comprises a plurality of optical pixel sensors arranged in a line and the number of pixels in the said dimension of the scanned image is less than the number of optical pixel sensors.

Preferably, the image distortion is corrected by:

calculating a magnification factor of the scanner module from the said comparison; and correcting the image distortion using that magnification factor.

Preferably still, the image distortion is corrected by:

calculating a magnification factor equal to $N(y/x)$,

where:

$y$ is the number of pixels in the scanned image; $x$ is the number of pixels representing the said dimension of the reference pattern; and $N$ is the number of optical pixel sensor; and

correcting the image distortion using that magnification factor.

The method may further comprise calculating the image block end point in accordance with the following equation:

$$E = S + N\left(\frac{x}{y}\right) - 1 + \alpha \ ,$$

where:

E is the end point;
S is the image block start point; and
$\alpha$ is a compensating value.

Conveniently the image distortion may be corrected through selective image-processing on the scanned data.

Advantageously the image distortion is preferably corrected by adjusting an advance distance of a line feed motor to control the transfer distance of an object being scanned.

According to a second aspect of the present invention there is provided a shuttle scanner comprising:

a linear optical sensor for scanning a reference pattern having a predetermined dimension parallel to the optical sensor; and

control means for comparing that dimension of the scanned image with that of the reference pattern and correcting image distortion occurring between adjacent image blocks by determining an image block end point in accordance with the result of that comparison.

The present invention will now be described by way of example with reference to the accompanying drawings in which:

FIG. 1 is a diagram showing the division of a scanned object into a number of blocks;
FIG. 2 is a section view illustrating a constitution of a typical shuttle scanner module; and
FIG. 3 is a flow chart of a method for compensating for a distortion occurring between blocks of a scanned image, according to the present invention.

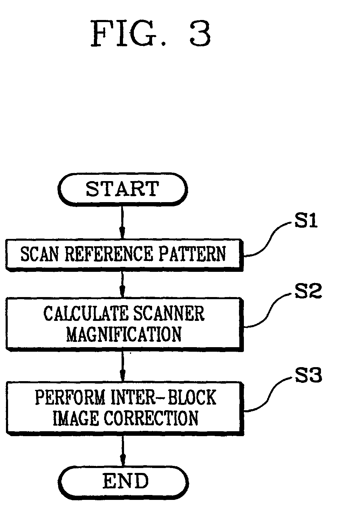

Referring to FIG. 3, a reference pattern having a known vertical dimension (size) is scanned in a step S1. That is, a contrasting pattern formed on a reference object to be scanned is initially scanned using an assembled scanner module, i.e., one bearing a degree of assembly tolerance. The reference pattern is made up of a predetermined number of dots arranged vertically, i.e., along the paper feed path. In order to establish a practical range of measurements of magnification, the number of dots should be significantly fewer than the pixel number (e.g., 128) of the optical sensor. In the example of the present invention, the reference pattern has a vertical size of 100 dots.

In step S2, the degree of magnification of the scanner is calculated through a comparison of the detected size of a scanned image with that of the reference pattern. That is, assuming the size of the reference pattern as a value x, the size of an actually scanned image has a value y, and the pixel number has a value N, the magnification factor can be calculated as: N(y/x). For example, if the reference pattern is 100 dots and the scanned image is detected as 97 dots, the image is being magnified by 100/97 times.

In step S3, a given block interval of the scanned object is corrected using the above ratio for determining magnification, i.e., the relative sizes of the scanned image and reference pattern. The present invention can be accomplished using either of two methods for performing inter-block image correction.

In the first method, assuming a drive quantity of a line feed motor is set to 128/300 inches for controlling a transfer distance between blocks, only 124 pixels, which is a truncated approximation of 128 x (97/100) pixels, are processed as image data. Then corrective programming is performed using an on-board data processor and applicable software in accordance with the following equation:

$$E = S + N\left(\frac{x}{y}\right) - 1 + \alpha$$

where E is the end point of the processed image, S is the start point of the image being scanned, y is a number of dots representing the vertical size of a scanned image, x is a number of dots representing the vertical size of a reference pattern, N is the pixel number of the optical sensor of a scanner, and $\alpha$ is a compensating value according to the scanner's drive delay.

In the second method, a drive quantity of a line feed motor is adjusted according to a calculated magnification factor. That is, for a reference pattern size of 100 dots and scanned image of 97 dots, which determines a magnification factor of 100/97, a one-block transfer distance of a line feed motor is calculated as: N(x/y).

As described in the above, the present invention has the effect of compensating image distortion occurring between blocks due an error in magnification resulting from assembling allowances, by programming of an on-board data image processor or by adjusting a drive quantity of a line feed motor for scanning the scanned object.

**Claims**

1. A method for compensating for inter-block image distortion in a shuttle scanner having a linear optical sensor, comprising:

scanning a reference pattern having a predetermined dimension parallel to the optical sensor;

comparing that dimension of the scanned image with that of the reference pattern; and correcting image distortion occurring between adjacent image blocks by determining an image block end point in accordance with the result of that comparison.

2. A method according to claim 1 in which the linear optical sensor comprises a plurality of optical pixel sensors arranged in a line.

3. A method according to claim 2 in which the number of pixels in the said dimension of the scanned image is less than the number of optical pixel sensors.

4. A method according to any one of claims 1-3 in which the image distortion is corrected by:

calculating a magnification factor of the scanner module from the said comparison; and correcting the image distortion using that magnification factor.

5. A method according to claim 2 or claim 3 in which the image distortion is corrected by:

calculating a magnification factor equal to N(y/x), where:

y is the number of pixels in the scanned image;
x is the number of pixels representing the said dimension of the reference pattern; and
N is the number of optical pixel sensor; and correcting the image distortion using that magnification factor.

6. A method according to claim 5 further comprising calculating said image block end point in accordance with the following equation:

$$E = S + N\left(\frac{x}{y}\right) - 1 + \alpha \,,$$

where:

E is the end point;
S is the image block start point; and
$\alpha$ is a compensating value.

7. A method according to any preceding claim in which the image distortion is corrected through selective image-processing on the scanned data.

8. A method according to any preceding claim in which the image distortion is corrected by adjusting an advance distance of a line feed motor to control the transfer distance of an object being scanned.

9. A shuttle scanner comprising:

a linear optical sensor for scanning a reference pattern having a predetermined dimension parallel to the optical sensor; and
control means for comparing that dimension of the scanned image with that of the reference pattern and correcting image distortion occurring between adjacent image blocks by determining an image block end point in accordance with the result of that comparison.

**Patentansprüche**

1. Verfahren zum Kompensieren von Interblock-Bildverzerrungen in einem Shuttle-Scanner mit einem linearen optischen Sensor, das die folgenden Schritte umfasst:

Scannen eines Referenzmusters mit einer vorbestimmten Abmessung parallel zu dem optischen Sensor;
Vergleichen dieser Abmessung des gescannten Bildes mit der des Referenzmusters; und
Korrigieren von Bildverzerrungen, die zwischen benachbarten Bildblöcken auftreten, durch Ermitteln eines Bildblockendpunkts gemäß dem Ergebnis dieses Vergleichs.

2. Verfahren nach Anspruch 1, wobei der lineare optische Sensor eine Mehrzahl von in einer Reihe angeordneten optischen Pixelsensoren umfasst.

3. Verfahren nach Anspruch 2, bei dem die Anzahl der Pixel in der genannten Abmessung des gescannten Bildes kleiner als die Anzahl der optischen Pixelsensoren ist.

4. Verfahren nach einem der Ansprüche 1 bis 3, bei dem die Bildverzerrung korrigiert wird durch:

Berechnen eines Vergrößerungsfaktors des Scannermoduls anhand des genannten Vergleichs; und
Korrigieren der Bildverzerrung mittels dieses Vergleichsfaktors.

5. Verfahren nach Anspruch 2 oder Anspruch 3, bei dem die Bildverzerrung korrigiert wird durch:

Berechnen eines Vergrößerungsfaktors gleich N(y/x), wobei:

y die Anzahl von Pixeln in dem gescannten Bild ist;

x die Anzahl von Pixeln ist, die die genannte Abmessung des Referenzmusters repräsentieren; und

N die Anzahl der optischen Pixelsensoren ist; und

Korrigieren der Bildverzerrung mittels dieses Vergrößerungsfaktors.

6. Verfahren nach Anspruch 5, das ferner das Berechnen des genannten Bildblockendpunkts mittels der folgenden Gleichung umfasst:

$$E = S + N\,(x/y) - 1 + \alpha$$

wobei:

E der Endpunkt ist;
S der Bildblockstartpunkt ist; und
$\alpha$ ein Kompensationswert ist.

7. Verfahren nach einem der vorherigen Ansprüche, bei dem die Bildverzerrung durch selektive Bildverarbeitung an den gescannten Daten korrigiert wird.

8. Verfahren nach einem der vorherigen Ansprüche, bei dem die Bildverzerrung durch Justieren einer Vorschubdistanz eines Zeilenvorschubmotors korrigiert wird, um die Transferdistanz eines gescannten Objekts zu regulieren.

9. Shuttle-Scanner, der Folgendes umfasst:

einen linearen optischen Sensor zum Scannen eines Referenzmusters mit einer vorbestimmten Abmessung parallel zu dem optischen Sensor; und

Steuermittel zum Vergleichen dieser Abmessung des gescannten Bildes mit der des Referenzmusters und Korrigieren der zwischen benachbarten Bildblöcken auftretenden Bildverzerrung durch Ermitteln eines Bildblockendpunkts gemäß dem Ergebnis dieses Vergleichs.

**Revendications**

1. Procédé servant à compenser la distorsion d'image interbloc dans un scanneur va-et-vient ayant un capteur optique linéaire, comprenant :

le scannage d'un modèle de référence ayant une dimension prédéterminée qui est parallèle au capteur optique ;

la comparaison de cette dimension de l'image scannée à celle du modèle de référence ; et

la correction de la distorsion d'image se produisant entre des blocs d'image adjacents, en déterminant un point d'extrémité du bloc d'image conformément au résultat de cette comparaison.

2. Procédé, selon la revendication 1, dans lequel le capteur optique linéaire comporte une pluralité de capteurs optiques de pixels qui sont disposés dans une ligne.

3. Procédé, selon la revendication 2, dans lequel le nombre de pixels dans ladite dimension de l'image scannée est inférieur au nombre de capteurs optiques de pixels.

4. Procédé, selon l'une quelconque des revendications 1 à 3, dans lequel la distorsion d'image est corrigée par :

le calcul d'un facteur d'agrandissement du module de scanneur à partir de ladite comparaison ; et
la correction de la distorsion d'image grâce à l'utilisation de ce facteur d'agrandissement.

5. Procédé, selon la revendication 2 ou la revendication 3, dans lequel la distorsion d'image est corrigée par :

le calcul d'un facteur d'agrandissement qui est égal à N (y/x), expression dans laquelle :

y est le nombre de pixels dans l'image scannée ;
x est le nombre de pixels représentant ladite dimension du modèle de référence ; et
N est le nombre de capteurs optiques de pixels ; et

la correction de la distorsion d'image grâce à l'utilisation de ce facteur d'agrandissement.

6. Procédé, selon la revendication 5, comprenant en outre le calcul dudit point d'extrémité du bloc d'image conformément à l'équation suivante :

$$E = S + N\,\frac{(x)}{y} - 1 + \alpha,$$

dans laquelle :

E est le point d'extrémité ;
S est le point de départ du bloc d'image ; et
$\alpha$ est une valeur de compensation.

**7.** Procédé, selon l'une quelconque des revendications précédentes, dans lequel la distorsion d'image est corrigée par le traitement sélectif de l'image sur les données scannées.

**8.** Procédé, selon l'une quelconque des revendications précédentes, dans lequel la distorsion d'image est corrigée par le réglage d'une distance d'avance d'un moteur de changement de ligne afin de contrôler la distance de transfert d'un objet en cours de scannage.

**9.** Scanneur va-et-vient comprenant :

un capteur optique linéaire servant à balayer un modèle de référence ayant une dimension prédéterminée qui est parallèle au capteur optique ; et
un moyen de contrôle servant à comparer cette dimension de l'image scannée à celle du modèle de référence et la correction de la distorsion d'image se produisant entre des blocs d'image adjacents, en déterminant un point d'extrémité du bloc d'image conformément au résultat de cette comparaison.

# FIG. 1

| | |
|---|---|
| 128 dots | BLOCK 1 |
| | BLOCK 2 |
| | . |
| | . |
| | . |
| | BLOCK 27 |

3,507 dots

# FIG. 2

23a   23b   23c

23

b

22

a

21

10

# FIG. 3

START

SCAN REFERENCE PATTERN — S1

CALCULATE SCANNER MAGNIFICATION — S2

PERFORM INTER-BLOCK IMAGE CORRECTION — S3

END